(19) **Europäisches Patentamt**

**European Patent Office**

**Office européen des brevets**

(11) **EP 1 055 648 A1**

(12) **EUROPEAN PATENT APPLICATION**
published in accordance with Art. 158(3) EPC

(43) Date of publication:
**29.11.2000 Bulletin 2000/48**

(51) Int. Cl.⁷: **C04B 28/18**, C04B 24/42
// C04B24:42, C04B38:02,
(C04B111/40, 111:22, 111:27,
111:76)

(21) Application number: **99973406.4**

(22) Date of filing: **08.10.1999**

(86) International application number:
**PCT/JP99/05585**

(87) International publication number:
**WO 00/35827 (22.06.2000 Gazette 2000/25)**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.12.1998 JP 35470298**
**01.02.1999 JP 2437099**
**01.02.1999 JP 2437199**
**31.08.1999 JP 24537999**
**31.08.1999 JP 24538099**

(71) Applicant:
**Sumitomo Metal Mining Company Limited**
**Tokyo 105-0004 (JP)**

(72) Inventor: **MATSUSHITA, Fumiaki**
**Suzuka-gun Mie 519-1100 (JP)**

(74) Representative:
**Kramer, Reinhold, Dipl.-Ing.**
**Blumbach, Kramer & Partner**
**Patentanwälte**
**Radeckestrasse 43**
**81245 München (DE)**

(54) **LIGHT-WEIGHT CELLULAR CONCRETE WITH EXCELLENT CARBONATIZATION RESISTANCE**

(57) This invention provides autoclaved light weight concrete manufactured with a slurry comprising a mixture of a powdered silicic material and calcic material as the main raw materials, wherein organopolysiloxane having at least one siloxane unit per molecule selected from the group of $R(CH_3)SiO_{2/2}$, $R(CH_3)_2SiO_{1/2}$, and $RSiO_{3/2}$ (where R in the equation is an alkyl group represented by $C_nH_{2n+1}$) is added to the slurry mixture by an amount of at least 0.0005% and less than 0.30% by weight.

EP 1 055 648 A1

Printed by Xerox (UK) Business Services
2.16.7 (HRS)/3.6

**Description**

<u>Background of the Invention</u>

Autoclaved light weight concrete (ALC) has as its main raw materials, silicic powder such as silica, and calcic powder such as quick lime, cement, and is manufactured by forming a slurry by adding additives such as water and aluminum powder to these fine powders, and then it is allowed to foam due to the reaction with the aluminum powder, and then becomes semi-hard due to the reaction with the calcic powder, after which it is formed to specified dimensions and high-temperature and high-pressure vaporization curing is performed using an autoclave. ALC is light weight and since it has excellent fireproofing, insulating and workability characteristics, it is widely used as a construction material.

In this way, ALC is used for its strong points of being a light weight concrete having internal air bubbles and pores and having an absolute dry specific gravity of $500kg/m^3$. However, since the air bubbles and pores make up 80% of the total volume, it is a very porous material with lots of air space, so moisture or gas can easily get into the ALC.

Tobermorite is the main mineral ingredient of ALC, and it reacts with the carbon dioxide gas in air in the presence of moisture, to decompose to silica gel and calcium carbonate. This is called "carbonation".

Carbonation causes deterioration, such as decrease in strength and cracking, of the ALC to occur. Therefore, in order to prevent or delay carbonation, a method of preventing moisture or carbon dioxide gas from entering into the ALC, or a method of applying a carbonation resistance function to the tobermorite is desired.

Up until now, for the former, a method for preventing moisture or carbon dioxide gas from entering into the ALC by performing surface finishing of the ALC surface has been used. However, carbonation resistance by surface finishing is not sufficient, and it has been found that carbonation proceeds over time as the surface treated ALC is used. On the other hand, for the later, which is expected to be a fundamental countermeasure, no efficient industrial method has been found, despite various research.

In the prior art, to prevent deterioration of the ALC, organopolysiloxane was added to the ALC or calcium silicate hydrate construction material in order to give it water-repellent property. To give water-repellent property, the amount of organopolysiloxane that was added was relatively large, for example, as disclosed in Japanese patent publication No. Tokukai Sho55-42272, 0.2 to 10% by weight of organopolysiloxane was added, or as disclosed in Japanese patent publication No. Tokuko Heil-58148, 0.5 to 10% by weight of organopolysiloxane containing an alkyl group was added. The reason for this was, that depending on the mechanism that provides water-repellent property, the contact angle between the ALC material and the water changes by adding organopolysiloxane, and this makes it possible to prevent water from getting inside the porous ALC or calcium silicate hydrate construction material due to a capillary phenomenon. Therefore, it was thought that a certain amount must be added.

Furthermore, Japanese patent publication Tokukai No. Hei5-310479 describes ALC with improved carbonation-resistant property. However, this case as well centers around water-repellent property. In detail, it is necessary to reduce the water content before carbonation of the manufactured ALC can advance, and in this case that the water content of the ALC must be up to 10% by weight, the rate of carbonation must be up to 10%, and the water-repellent property must be required such that a bead of water is formed when water is dropped onto the material.

However, ALC with excellent water-repellent property can normally be said to have excellent weather resistance, however freezing damage often occurs. Freezing damage is a phenomenon in which because the material has excellent water-repellent property, moisture (water that flows in directly or water that occurs due to condensation of water vapor) easily builds up between the outside coated layer and the ALC, and where that water that builds up freezes during the winter causing the coating to peal or become swollen.

In consideration of these problems of the prior art, the objective of this invention is to provide ALC with excellent durability against carbonation which is one kind of chemical deterioration.

Moreover, a further objective of the current invention is to provide ALC that has carbonation-resistant property, that is water absorbent and that has anti-freezing characteristics.

<u>Disclosure of the Invention</u>

The ALC of this invention is manufactured by combining powdered silicic material and calcic material into a slurry, then by adding to the slurry organopolysiloxane having at least one siloxane unit per molecule selected from the group of $R(CH_3)SiO_{2/2}$, $R(CH_3)_2SiO_{1/2}$, or $RSiO_{3/2}$ (where R is the alkyl group expressed as $C_nH_{2n+1}$) by an amount of at least 0.0005 weight % and less than 0.3 weight %, and preferably at least 0.001 weight % and up to 0.2 weight %, or even better up to 0.1 weight %.

Furthermore, the ALC of this invention is manufactured by combining powdered silicic material and calcic material into a slurry, then by adding to the slurry a molecule of polydimethylsiloxane whose side chains are all of the methyl group by an amount between 0.001 weight % and 0.30 weight %, and preferably up to 0.20 weight %.

In addition, the carbonation in the ALC of this invention is calculated for a sample that has been left for 20 days under test conditions having a temperature of 20°C, relative humidity of 90%, and a constant atmosphere with carbon dioxide gas density of 3% by volume, and where the carbonation resistance index, that is defined as the value of the carbonation of a blank sample divided by the carbonation of the sample, is 1 to 5, or preferably 1.5 to 3.0.

$$\text{Carbonation (\%)} = (C - Co)/(Cmax - Co) \times 100$$

Here, C and Co are the combined amount of carbon dioxide gas of each sample and uncarbonated sample and are both analyzed using thermal analysis as the amount of reduction in weight due to the decomposition of carbon dioxide gas at 600°C to 800°C, and Cmax is the amount of combined carbon dioxide gas when the amount of calcium contained in each sample is analyzed and when all of that calcium becomes calcium carbonate.

As the result of various research and trial and error, the inventors found that water-repellent ALC, which was made by adding various amounts of organopolysiloxane to the slurry of mixed main raw materials, often had excellent carbonation-resistant property. Moreover, the inventors found that by adding even a very small amount, such as 0.01% by weight, of organopolysiloxane, it was possible to obtain the effect of carbonation-resistance. It was also found that the carbonation-resistant property did not correspond to the water-repellent characteristic. The cause of excellent carbonation resistance is still not clear, however not all ALC with excellent water repellent characteristics have excellent carbonation-resistant property, and since the carbonation reaction advances with the existence of moisture, it is thought that the change in the moisture condition on the tobermorite surface brought about by the organopolysiloxane is probably the cause.

The place where the carbonation reaction takes place is where water adheres to the surface, and it is thought as a reason that the mechanism of carbonation resistance, and therefore the effective amount of additive for it differs from the mechanism that acts to make the surface water repellent and the effective amount of additive for it. As the inventors experimented by changing the amount of organopolysiloxane added between 0.0001 to 20% by weight, carbonation resistance was seen between 0.0005 and 0.001% by weight even though no water-repellent characteristic was seen. As the added amount increases, the carbonation-resistant property improves, however, when then added amount becomes too large, the water-repellent characteristic appears and water-absorption becomes worse, and when the added amount increases further, the amount of tobermorite in the ALC becomes insufficient, and the dry contraction rate becomes large and the anti-freezing characteristic becomes poor. Based on these experiments, the amount added was determined to be less than 0.3% by weight, and preferably 0.2% by weight or less, and even better 0.1% by weight or less.

The carbonation-resistant property was evaluated as follows. A 10 mm x 40 mm x 80 mm ALC sample was formed and used in an accelerated carbonation test. The sample was left for 20 days under test conditions having a temperature of 20°C, relative humidity of 90%, and a constant atmosphere with carbon dioxide gas density of 3 volume %. The carbonation of the sample was calculated with the following equation.

$$\text{Carbonation (\%)} = (C - Co)/(Cmax - Co) \times 100$$

Here, C is the combined amount of carbon dioxide gas of the samples provided for the accelerated carbonation test, Co is the amount of combined carbon dioxide gas of the uncarbonated samples, and they are both analyzed using thermal analysis as the amount of reduction in weight due to the decomposition of carbon dioxide gas at 600°C to 800°C, and Cmax is the combined amount of carbon dioxide gas when the amount of calcium contained in each sample is analyzed and when all of that calcium becomes calcium carbonate. Based on the analysis results of the carbonation of the sample, the carbonation resistance index is defined as the carbonation of ALC to which no organopolysiloxane is added at all (blank sample) divided by the carbonation of the sample.

Furthermore, the inventors investigated the relationship between the water absorption, which is the opposite of water repellence, and the carbonation-resistant property.

Water absorption was evaluated as follows.

A cubic sample, 100 mm long on each side, was formed, and the absorption of the whole-surface was measured. During measurement, a sample that was dried at 70°C in a drier until it became a constant weight was then completely immersed in water at a temperature of $20 \pm 2$°C for 24 hours. While the sample was immersed, the direction of foaming was faced upward, and the position of the top surface was 30 mm below the surface of the water. The whole-surface water absorption rate of the sample (rate of volume increase) was calculated by the following equation.

$$\text{Whole-surface water absorption (volume \%)} = \{(W - Wo) \times \text{Specific gravity of water}/Vo\} \times 100$$

Here, W is the weight (g) of the sample after being immersed for 24 hours, Wo is the weight (g) of the sample before being immersed (initial weight), and Vo is the volume (1000 cm$^3$) of the sample before being immersed (initial volume).

The larger the calculated whole-surface absorption rate is the better the water absorption is.

Furthermore, the inventors investigated the anti-freezing damage characteristic.

The anti-freezing damage characteristic was evaluated as described below using a freezing test.

This is an experiment to check finish bulging due to freezing damage (singe surface freezing and thawing test). Multi-layer finishing is performed on a single surface (acrylic tile) of a 30 cm x 30 cm x 10 cm sample.

Using test apparatus in which it is possible to separately control two rooms A and B, the finished surface of the sample was placed in room A and room A was repeatedly heated and cooled between the temperatures -20 ± 2°C and 10 ± 2°C at a frequency of 2 cycles/day for 30 days. The bulging of the surface was checked every 5 days. Room B was kept at a relative humidity of 90% or greater and temperature of 20°C using a humidifier.

Description of the Preferred Embodiments

The preferred embodiments of the invention are described below.

To form the ALC, 40% by weight of silica as the silicic material, 5% by weight of quick lime as the calcic material, 30% by weight of cement, 5% by weight of gypsum, and further 20% by weight of return materials are mixed, then water, aluminum powder and a surface active agent are added to the main raw materials and mixed to form a material slurry. The water to solid ratio was 0.6. After the slurry was hardened by hydration of the calcic material, high-temperature and high-pressure vaporization curing was performed in an autoclave for 6 hours at 185°C and 11 atmospheres to form the ALC.

(Embodiment 1)

When making the aforementioned slurry of material, the amount of organopolysiloxane containing an alkyl group was changed within tile range of 0.0001 to 15% by weight and mixed with the material slurry. A total of six types of organopolysiloxane containing an alkyl group, as shown in Table 1, were used.

The results of the carbonation-resistant property of the samples to which organopolysiloxane containing an alkyl group was added are shown in Table 2. Here, for the carbonation-resistant property, samples with an carbonation resistance index of 1.5 or greater were determined to be acceptable, an index of 2.0 or greater were determined to be suitable, and values outside this range were determined to be rejected.

From Table 2 it can be seen that the carbonation-resistant property was suitable for all types of organopolysiloxane containing an alkyl group at the addition amount of 0.0005% by weight or more. For samples to which organopolysiloxane was added in the amount of 0.0005% or more and less than 0.5% by weight, it was also possible to obtain carbonation-resistant property that were better than normal ALC (blank sample).

When the added amount was 1 to 2% by weight, carbonation did not advance at all so the carbonation resistance index became infinite. However, samples to which 12% by weight or more was added, the drying shrinkage rate (according to JISA5416) was not within the JIS standard of 0.05% or less, so the sample was unsuitable to be used as ALC.

By controlling the amount added of the samples A thru F of organopolysiloxane containing an alkyl group that were used in testing, it was possible to obtain the desired ALC. The inventors also obtained substantially the same results using organopolysiloxane samples G and H shown in Table 6. However, since it is possible to create an unlimited number of types of organopolysioxane containing an alkyl group, it is impossible to check all types through experimentation. The types used here were organopolysiloxane containing an alkyl group within the range that are normally used for silicic material such as ALC, and by controlling the amount added of organopolysiloxane containing an alkyl group that are within the normally used range, it is possible to obtain the desired ALC.

(Embodiment 2)

When making the aforementioned slurry of raw materials, the amount of polydimethylsiloxane was changed within the range of 0.0001 to 20% by weight and mixed with the slurry. A total of six types of samples having polydimethylsiloxane viscosity of 5, 10, 20, 50, 100 and 200 cs were used.

The results of the carbonation-resistant property of the samples to which polydimethylsiloxane was added are shown in Table 3. Here, for the carbonation-resistant property, samples with an carbonation resistance index of 1.5 or greater were determined to be acceptable, an index of 2.0 or greater were determined to be suitable, and values outside this range were determined to be rejected.

From Table 3 it can be seen that the carbonation-resistant property was suitable for all types of polydimethylsiloxane that were added at the amount of 0.001% by weight or more. For samples to which between 0.001 and 0.5% by weight of polydimethylsiloxane was added, it was also possible to obtain carbonation-resistant property that were better than normal ALC.

When the added amount was 1 to 2% by weight, carbonation did not advance at all so the carbonation resistance index became infinite. However, samples to which 17.5% by weight or more was added, the drying shrinkage rate (according to JISA5416) was not within the JIS standard, so the sample was unsuitable to be used as ALC.

By controlling the amount added of polydimethylsiloxane with differing viscosity of that was used in testing, it was possible to obtain the desired ALC. The types used here were polydimethylsiloxane having viscosity within the range normally used for silicic material such as ALC, and by controlling the amount added of polydimethylsiloxane whose viscosity is within the normally used range, it is possible to obtain the desired ALC.

In Embodiment 1 and Embodiment 2, the effect of the organopolysiloxane varied somewhat, however in the range of 0.001 to 0.1, it was substantially the same.

## Table 1

| | |
|---|---|
| A | $H_3C-\underset{CH_3}{\overset{CH_3}{Si}}O-\left(\underset{CH_3}{\overset{CH_3}{Si}}O\right)_8\left(\underset{C_8H_{17}}{\overset{CH_3}{Si}}O\right)_3-\underset{CH_3}{\overset{CH_3}{Si}}-CH_3$ |
| B | $H_3C-\underset{CH_3}{\overset{CH_3}{Si}}O-\left(\underset{CH_3}{\overset{CH_3}{Si}}O\right)_4\left(\underset{C_4H_9}{\overset{CH_3}{Si}}O\right)_4-\underset{CH_3}{\overset{CH_3}{Si}}-CH_3$ |
| C | $H_3C-\underset{CH_3}{\overset{CH_3}{Si}}O-\left(\underset{CH_3}{\overset{CH_3}{Si}}O\right)_1\left(\underset{C_2H_5}{\overset{CH_3}{Si}}O\right)_2-\underset{CH_3}{\overset{CH_3}{Si}}-CH_3$ |
| D | $H_3C-\underset{CH_3}{\overset{CH_3}{Si}}O-\left(\underset{C_8H_{17}}{\overset{CH_3}{Si}}O\right)_{10}-\underset{CH_3}{\overset{CH_3}{Si}}-CH_3$ |
| E | $H_3C-\underset{CH_3}{\overset{CH_3}{Si}}O-\left(\underset{CH_3}{\overset{CH_3}{Si}}O\right)_{16}\left(\underset{C_8H_{17}}{\overset{CH_3}{Si}}O\right)_1-\underset{CH_3}{\overset{CH_3}{Si}}-CH_3$ |
| F | $H_3C-\underset{CH_3}{\overset{CH_3}{Si}}O-\left(\underset{CH_3}{\overset{CH_3}{Si}}O\right)_{20}\left(\underset{C_2H_5}{\overset{CH_3}{Si}}O\right)_7-\underset{CH_3}{\overset{CH_3}{Si}}-CH_3$ |

Table 2

| Amount of Addition (weight%) | Organopolysiloxane Type | | | | | |
|---|---|---|---|---|---|---|
| | A | B | C | D | E | F |
| 0.0001 | 1.0 | 1.1 | 1.0 | 1.1 | 1.1 | 1.1 |
| 0.0002 | 1.2 | 1.2 | 1.2 | 1.2 | 1.3 | 1.2 |
| 0.0005 | 1.5 | 1.5 | 1.5 | 1.5 | 1.6 | 1.5 |
| 0.001 | 1.7 | 1.8 | 1.7 | 1.8 | 1.8 | 1.7 |
| 0.01 | 2.0 | 2.0 | 2.0 | 2.0 | 2.0 | 2.1 |
| 0.1 | 2.0 | 2.0 | 2.0 | 2.0 | 2.0 | 2.1 |
| 0.5 | 7.6 | 6.5 | 5.3 | 5.5 | 5.8 | 6.3 |
| 1 | ∞ | ∞ | ∞ | ∞ | ∞ | ∞ |
| 2 | ∞ | ∞ | ∞ | ∞ | ∞ | ∞ |
| 5 | 11.4 | 12.6 | 10.6 | 11.2 | 9.7 | 10.4 |
| 10 | 10.2 | 9.7 | 12.6 | 10.9 | 8.9 | 9.6 |
| 12 | X | X | X | X | X | X |
| 15 | X | X | X | X | X | X |

X : This is Unsuitable, because the drying shrinkage rate was not within the JIS standard.

Table 3

| Amount of Addition (weight%) | Viscosity of Organopolysiloxane (cs) | | | | | |
|---|---|---|---|---|---|---|
| | 5 | 10 | 20 | 50 | 100 | 200 |
| 0.0001 | 1.0 | 1.0 | 1.0 | 1.0 | 1.0 | 1.0 |
| 0.0005 | 1.2 | 1.2 | 1.3 | 1.3 | 1.2 | 1.2 |
| 0.001 | 1.5 | 1.5 | 1.6 | 1.6 | 1.6 | 1.5 |
| 0.01 | 1.7 | 1.8 | 1.8 | 1.8 | 1.7 | 1.6 |
| 0.1 | 2.0 | 2.1 | 2.0 | 2.0 | 1.9 | 1.9 |
| 0.5 | 5.9 | 7.2 | 7.0 | 7.6 | 4.6 | 3.9 |
| 1 | ∞ | ∞ | ∞ | ∞ | ∞ | ∞ |
| 2 | ∞ | ∞ | ∞ | ∞ | ∞ | ∞ |
| 5 | ∞ | ∞ | ∞ | ∞ | ∞ | ∞ |
| 10 | 10.2 | 9.8 | 10.1 | 9.2 | 7.3 | 7.0 |
| 15 | 8.6 | 9.5 | 9.4 | 7.1 | 5.9 | 4.9 |
| 17.5 | X | X | X | X | X | X |
| 20 | X | X | X | X | X | X |

X : This is Unsuitable, because the drying shrinkage rate was not within the JIS standard.

(Embodiment 3)

The silicic material, calcic material and return materials were mixed to obtain a mixture of main raw materials where the silicic material was 40% by weight, the calcic material was 40% by weight and the return materials were 20% by weight. When doing this, silica was used as the silicic material, and quick lime, cement and gypsum were used as the calcic material. Of the 40% by weight of calcic material, 5% by weight was quick lime, 30% by weight was cement and 5% by weight was gypsum.

Water, aluminum powder and surface active agent were added to these main raw materials and mixed to form a slurry. When doing this, a slurry to which no amount of the dimethylpolysiloxane, whose side chains are all of the methyl group, was added (blank sample) was made, as well as a slurry to which dimethylpolysiloxane with a viscosity of 20cs was added, was made. The amounts of dimethylpolysiloxane added to the slurry were 0.0005 % by weight, 0.001% by weight, 0.005% by weight, 0.01% by weight, 0.05% by weight, 0.10% by weight, 0.15% by weight, 0.18% by weight, 0.20% by weight, 0.30% by weight and 0.40% by weight. Moreover, the ratio of water to solid (weight ratio) was 0.6.

After the slurry was hardened by hydration of the calcic material, high-temperature and high-pressure vaporization curing was performed in an autoclave for 6 hours at 185°C and 11 atmospheres.

The samples of formed ALC were tested for (1) carbonation-resistant property and (2) water-absorption, or in other words whole-surface absorption rate, and the results are shown in Table 4. (3) anti-freeze damage characteristic was also investigated.

The absorbtion characteristic was determined to be "completely rejected" for an overall absorption rate of less than 8% by volume, "rejected" for a rate between 8% and 12% (exclusive) by volume, "acceptable" for a rate between 12% and 16% by volume, "suitable" for a rate larger than 16% and lower than 20% by volume, and "very suitable" for a rate 20% or greater by volume. In Table 4, "rejected" is indicated by a triangle, "acceptable" is indicated by a circle, "suitable" is indicated by a square, and "very suitable" by a double circle. When water was dropped onto the surface of the ALC, beads of water were repelled on "completely rejected" samples, semi beads of water were formed on "rejected" samples, beads of water were partially absorbed in "acceptable" sample, the entire beads of water were absorbed in "suitable" samples, and the entire beads of water were immediately absorbed in "very suitable" samples.

Table 4

| Sample | Addition Amount of Dimethylpolysioxane | Carbonation-resistant Property | | Water-absorption | |
|---|---|---|---|---|---|
| | | Carbonation resistance index | Evaluation | Whole-surface Absorption (Volume%) | Evaluation |
| Blank | — | 1.0 | — | 22.4 | — |
| 1 | 0.0005 | 1.3 | △ | 21.7 | ◎ |
| 2 | 0.001 | 1.6 | ○ | 22.1 | ◎ |
| 3 | 0.005 | 1.7 | ○ | 21.3 | ◎ |
| 4 | 0.01 | 1.8 | ◎ | 20.8 | ◎ |
| 5 | 0.05 | 1.9 | ◎ | 20.5 | ◎ |
| 6 | 0.10 | 2.0 | ◎ | 20.0 | ◎ |
| 7 | 0.15 | 2.6 | ◎ | 19.8 | □ |
| 8 | 0.18 | 2.8 | ◎ | 18.6 | □ |
| 9 | 0.20 | 3.1 | ◎ | 17.1 | □ |
| 10 | 0.30 | 4.6 | ◎ | 15.7 | ○ |
| 11 | 0.40 | 5.2 | ◎ | 11.3 | △ |

There were no abnormal results in the freezing damage test for Samples 1 thru 10, however, for Sample 11, bulging occurred because absorption was poor.

The following can be seen from Table 4:

(1) When the added amount of dimethylpolysiloxane, whose side chains are all of the methyl group, was 0.01 to 0.20% by weight, the carbonation-resistant property was much better than the normal ALC (blank sample), and the water-absorption was about the same.

(2) When the added amount of dimethylpolysiloxane, whose side chains are all of the methyl group, was 0.0005% by weight, the carbonation-resistant property was not sufficient, and when it was 0.40% by weight, the water-absorption and not sufficient.

(Embodiment 4)

The silicic material, calcic material and return materials were mixed to obtain a mixture of main raw materials where the silicic material was 40% by weight, the calcic material was 40% by weight and the repeated materials were 20% by weight. When doing this, silica was used as the silicic material, and quick lime, cement and gypsum were used as the calcic material. Of the 40% by weight of calcic material, 5% by weight was quick lime, 30% by weight was cement and 5% by weight was gypsum.

Water, aluminum powder and surface active agent were added to these main raw materials and mixed to form a slurry. When doing this, a slurry to which the organopolysiloxane A shown in Table 1 was not added (blank sample) was made, as well as a slurry to which organopolysiloxane A was added, was made. The amounts of organopolysiloxane A added to the slurry were 0.0001% by weight, 0.0005 % by weight, 0.001% by weight, 0.005% by weight, 0.01% by weight, 0.02% by weight, 0.04% by weight, 0.05% by weight, 0.10% by weight, 0.20% by weight, and 0.30% by weight. Moreover, the water to solid ratio (weight ratio) was 0.6.

After the slurry was hardened by hydration of the calcic material, high-temperature and high-pressure vaporization curing was performed in an autoclave for 6 hours at 185°C and 11 atmospheres.

The carbonation-resistant property and water-absorption for the samples of ALC are shown in Table 5. Determining the water-absorption was done in the substantially same way as for Embodiment 3.

(Embodiment 5)

Except for adding organopolysiloxane B shown in Table 1 when making the slurry, the experiment was performed in the substantially same way as for Embodiment 4. However, the added amounts of the organopolysiloxane B were 0.0001% by weight, 0.0005 % by weight, 0.001% by weight, 0.01% by weight, 0.04% by weight, 0.05% by weight, 0.10% by weight, 0.20% by weight, and 0.30% by weight.

The results for the carbonation-resistant property and water-absorption are shown in Table 5.

(Embodiment 6)

Except for adding organopolysiloxane C shown in Table 1 when making the slurry, the experiment was performed in the substantially same way as for Embodiment 4. However, the added amounts of the organopolysiloxane C were 0.0001% by weight, 0.0005 % by weight, 0.001% by weight, 0.01% by weight, 0.04% by weight, 0.05% by weight, 0.10% by weight, 0.20% by weight, and 0.30% by weight.

The results for the carbonation-resistant property and water-absorption are shown in Table 5.

(Embodiment 7)

Except for adding organopolysiloxane D shown in Table 1 when making the slurry, the experiment was performed in the substantially same way as for Embodiment 4. However, the added amounts of the organopolysiloxane D were 0.0001% by weight, 0.0005 % by weight, 0.001% by weight, 0.01% by weight, 0.04% by weight, 0.05% by weight, 0.10% by weight, 0.20% by weight, and 0.30% by weight.

The results for the carbonation-resistant property and water-absorption are shown in Table 5.

(Embodiment 8)

Except for adding organopolysiloxane E shown in Table 1 when making the slurry, the experiment was performed in the substantially same way as for Embodiment 4. However, the added amounts of the organopolysiloxane E were 0.0001% by weight, 0.0005 % by weight, 0.001% by weight, 0.01% by weight, 0.04% by weight, 0.05% by weight, 0.10% by weight, 0.20% by weight, and 0.30% by weight.

The results for the carbonation-resistant property and water-absorption are shown in Table 5.

(Embodiment 9)

Except for adding organopolysiloxane F shown in Table 1 when making the slurry, the experiment was performed in the substantially same way as for Embodiment 4. However, the added amounts of the organopolysiloxane F were 0.0001% by weight, 0.0005 % by weight, 0.001% by weight, 0.01% by weight, 0.04% by weight, 0.05% by weight, 0.10% by weight, 0.20% by weight, and 0.30% by weight.

The results for the carbonation-resistant property and water-absorption are shown in Table 5.

In the freezing test, bulging occurred in all of Embodiments 4 thru 9 when the amount of organopolysiloxane added was 0.30% by weight, however there was nothing abnormal for the amounts other than that.

Table 5

| | Organopolysiloxane | | Carbonation-resistant Property | | Water-absorption | |
|---|---|---|---|---|---|---|
| | Type | Amount of Addition (weight%) | Carbonation resistance index | Evaluation | Whole-surface Absorption (volume%) | Evaluation |
| Blank | — | — | 1.0 | — | 22.4 | ◎ |
| Embodiment 4 | A | 0.0001 | 1.2 | △ | 22.5 | ◎ |
| | | 0.0005 | 1.6 | ○ | 22.1 | ◎ |
| | | 0.001 | 2.0 | ◎ | 21.9 | ◎ |
| | | 0.005 | 2.2 | ◎ | 21.0 | ◎ |
| | | 0.01 | 2.5 | ◎ | 20.6 | ◎ |
| | | 0.02 | 3.2 | ◎ | 19.4 | □ |
| | | 0.04 | 3.5 | ◎ | 18.6 | □ |
| | | 0.05 | 3.6 | ◎ | 17.7 | □ |
| | | 0.10 | 3.8 | ◎ | 14.6 | ○ |
| | | 0.20 | 4.0 | ◎ | 12.9 | ○ |
| | | 0.30 | 4.2 | ◎ | 9.6 | △ |
| Embodiment 5 | B | 0.0001 | 1.3 | △ | 22.0 | ◎ |
| | | 0.0005 | 1.5 | ○ | 21.7 | ◎ |
| | | 0.001 | 2.2 | ◎ | 21.4 | ◎ |
| | | 0.01 | 2.7 | ◎ | 20.5 | ◎ |
| | | 0.04 | 3.3 | ◎ | 18.9 | □ |
| | | 0.05 | 3.7 | ◎ | 17.4 | □ |
| | | 0.10 | 4.0 | ◎ | 15.0 | ○ |
| | | 0.20 | 4.8 | ◎ | 12.1 | ○ |
| | | 0.30 | 5.0 | ◎ | 10.0 | △ |

| | | | | | | |
|---|---|---|---|---|---|---|
| Embodiment 6 | C | 0.0001 | 1.1 | △ | 21.7 | ◎ |
| | | 0.0005 | 1.5 | ○ | 21.2 | ◎ |
| | | 0.001 | 1.7 | ○ | 20.6 | ◎ |
| | | 0.01 | 2.3 | ◎ | 18.5 | □ |
| | | 0.04 | 3.0 | ◎ | 18.2 | □ |
| | | 0.05 | 3.2 | ◎ | 17.6 | □ |
| | | 0.10 | 3.6 | ◎ | 16.1 | □ |
| | | 0.20 | 4.1 | ◎ | 14.3 | ○ |
| | | 0.30 | 4.3 | ◎ | 11.8 | △ |
| Embodiment 7 | D | 0.0001 | 1.3 | △ | 22.2 | ◎ |
| | | 0.0005 | 1.6 | ○ | 22.0 | ◎ |
| | | 0.001 | 2.1 | ◎ | 21.5 | ◎ |
| | | 0.01 | 3.0 | ◎ | 20.1 | ◎ |
| | | 0.04 | 3.6 | ◎ | 19.0 | □ |
| | | 0.05 | 3.7 | ◎ | 17.3 | □ |
| | | 0.10 | 4.2 | ◎ | 15.6 | ○ |
| | | 0.20 | 4.8 | ◎ | 13.9 | ○ |
| | | 0.30 | 5.1 | ◎ | 10.6 | △ |
| Embodiment 8 | E | 0.0001 | 1.1 | △ | 21.5 | ◎ |
| | | 0.0005 | 1.6 | ○ | 21.3 | ◎ |
| | | 0.001 | 1.8 | ○ | 21.0 | ◎ |
| | | 0.01 | 2.2 | ◎ | 20.3 | ◎ |
| | | 0.04 | 3.1 | ◎ | 18.5 | □ |
| | | 0.05 | 3.4 | ◎ | 17.5 | □ |
| | | 0.10 | 3.9 | ◎ | 15.1 | ○ |
| | | 0.20 | 4.2 | ◎ | 12.9 | ○ |
| | | 0.30 | 4.6 | ◎ | 11.0 | △ |
| Embodiment 9 | F | 0.0001 | 1.3 | △ | 21.9 | ◎ |
| | | 0.0005 | 1.8 | ○ | 21.1 | ◎ |
| | | 0.001 | 2.4 | ◎ | 20.6 | ◎ |
| | | 0.01 | 2.6 | ◎ | 18.7 | □ |
| | | 0.04 | 3.5 | ◎ | 18.2 | □ |
| | | 0.05 | 3.8 | ◎ | 17.8 | □ |
| | | 0.10 | 4.5 | ◎ | 16.2 | □ |
| | | 0.20 | 4.7 | ◎ | 14.0 | ○ |
| | | 0.30 | 5.2 | ◎ | 10.9 | △ |

As can be seen from Table 5,

(1) For the samples of organopolysiloxane A thru F, when the added amount was between 0.0005 to 0.01% by weight, the carbonation-resistant property was much better than for the conventional ALC (blank sample), and the water-absorption was about the same.

(2) For the samples of organopolysiloxane A thru F, when the added amount was between 0.01 to 0.20% by weight, the carbonation-resistant property was much better than for the conventional ALC (blank sample), however the water-absorption was somewhat worse.

(3) For the samples of organopolysiloxane A thru F, when the added amount was 0.0001% by weight, the carbonation-resistant property was not sufficient, and when it was 0.30% by weight, the water-absorption was not sufficient.

## Table 6

As described in detail above, with this invention it is possible to obtain ALC that has excellent carbonation-resistant property as well as excellent durability against the carbonation phenomenon that is the cause for deterioration. In addition, it makes it possible to extend the useful life of ALC structures as well as reduce the cost of repairs and improvements. Moreover, this invention makes it possible to answer to the societal need of reducing industrial waste.

### Claims

1. Autoclaved light weight concrete manufactured with a slurry comprising a mixture of a powdered silicic material and calcic material as the main raw materials, the autoclaved light weight concrete being characterized in that organopolysiloxane has at least one siloxane unit per molecule selected from the group of $R(CH_3)SiO_{2/2}$, $R(CH_3)_2SiO_{1/2}$, and $RSiO_{3/2}$, where R in the equation is an alkyl group represented by $C_nH_{2n+1}$, is added to the slurry mixture in an amount of at least 0.0005 weight% and less than 0.30 weight %.

2. The autoclaved light weight concrete of claim 1 wherein the organopolysiloxane is added by an amount of up to 0.2% by weight.

3. The autoclaved light weight concrete of claim 1 wherein the organopolysiloxane is added by an amount of up to 0.1% by weight.

4. The autoclaved light weight concrete of claim 1 wherein the organopolysiloxane is added by an amount of up to 0.01% by weight.

5. Autoclaved light weight concrete manufactured with a slurry comprising a mixture of a powdered silicic material and calcic material as the main raw materials, wherein a polydimethylsiloxane molecule, whose side chains are all of the methyl group, is added to the slurry mixture by an amount of at least 0.001% and less than 0.3% by weight.

6. The autoclaved light weight concrete of claim 5 wherein the polydimethylsiloxane molecule is added by an amount of up to 0.2% by weight.

7. Autoclaved light weight concrete characterized in that provided that the carbonation of a sample, that has been left for twenty days under constant conditions of 20°C, 90% relative humidity and 3% by volume of carbon dioxide gas, is calculated by the following equation, the carbonation resistance index, that is defined as the value obtained by dividing the carbonation of a blank sample with the carbonation of the sample, is 1 to 5 or more:

$$\text{Carbonation (\%)} = (C - Co)/(Cmax - Co) \times 100$$

where C is the combined amount of carbon dioxide gas of each sample while Co is the combined amount of carbon dioxide gas of uncarbonated sample and are both analyzed using thermal analysis as the amount of reduction in weight due to the decomposition of carbon dioxide gas at 600°C to 800°C, and Cmax is the amount of combined carbon dioxide gas when the amount of calcium contained in each sample is analyzed and when all of that calcium becomes calcium carbonate.

8. The autoclaved light weight concrete of claim 7 wherein the carbonation resistance index is 1.5 to 3.0.

## INTERNATIONAL SEARCH REPORT

| | International application No. |
|---|---|
| | PCT/JP99/05585 |

**A. CLASSIFICATION OF SUBJECT MATTER**

Int.Cl⁷ C04B28/18 C04B24/42 C04B24:42 C04B38/02
C04B111:40 C04B111:22 C04B111:27 C04B111:76

According to International Patent Classification (IPC) or to both national classification and IPC

**B. FIELDS SEARCHED**

Minimum documentation searched (classification system followed by classification symbols)

Int.Cl⁷ C04B28/18 C04B24/42 C04B24:42 C04B38/02
C04B111:40 C04B111:22 C04B111:27 C04B111:76

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2000 |
| Kokai Jitsuyo Shinan Koho | 1971-1994 | Jitsuyo Shinan Toroku Koho | 1996-2000 |

Electronic data base consulted during the international search (name of data base and, where practicable, search terms used)

WPI (ALC AND POLYSILOXANE)

**C. DOCUMENTS CONSIDERED TO BE RELEVANT**

| Category* | Citation of document, with indication, where appropriate, of the relevant passages | Relevant to claim No. |
|---|---|---|
| Y | JP, 05-310479, A (Asahi Chemical Industry Co., Ltd.), 22 November, 1993 (22.11.93), Claim 1; Par. Nos. 8, 13 to 36 (Family: none) | 1-4,5-6,7-8 |
| Y | JP, 03-054175, A (SUMITOMO METAL MINING CO., LTD.), 08 March, 1991 (08.03.91), Claims; page 2, upper left column; example 4 (Family: none) | 1-4,5-6,7-8 |
| EX | JP, 11-292656, A (SUMITOMO METAL MINING CO., LTD.), 26 October, 1999 (26.10.99), Claim 1; Par. Nos. 6, 13; example 1; example of comparison, Fig. 1 (Family: none) | 1-4,5-6,7-8 |
| X | JP, 57-022162, A (Toho Kagaku Kogyo K.K.), 05 February, 1982 (05.02.82), Claims; examples 1 to 6; examples of comparison 7-12; Table 2 (Family: none) | 1-6 |
| X | JP, 56-134549, A (SUMITOMO METAL MINING CO., LTD.), 21 October, 1981 (21.10.81), Claims 1,2; Examples 1, 2 (Family: none) | 1-6 |

☒ Further documents are listed in the continuation of Box C. ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 11 January, 2000 (11.01.00) | 18 January, 2000 (18.01.00) |

| Name and mailing address of the ISA/ <br> Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP99/05585

C (Continuation). DOCUMENTS CONSIDERED TO BE RELEVANT

| Category* | Citation of document, with indication, where appropriate, of the relevant passages | Relevant to claim No. |
|---|---|---|
| X | JP, 59-232954, A (Toray Silicone K.K.), 27 December, 1984 (27.12.84), Claims   (Family: none) | 1-6 |

Form PCT/ISA/210 (continuation of second sheet) (July 1992)